# EUROPEAN PATENT APPLICATION

(11) **EP 0 940 992 A2**
(43) Date of publication of application: **08.09.1999**
(21) Application number: 99301284.8
(22) Date of filing: 23.02.1999
(51) Int. Cl.: H04N 7/26, H04N 7/30

(54) **Method and apparatus for generating selected image views from a larger image**

(30) Priority: 06.03.1998 US 36140
(71) Applicant: LUCENT TECHNOLOGIES INC., Murray Hill, New Jersey 07974-0636 (US)
(72) Inventor: Boyer, David Gray, Oceanport, New Jersey 07757 (US); Gaglianello, Robert D., Little Silver, New Jersey 07739 (US); Connaghan, Robert, Freehold, New Jersey 07728 (US); Nalwa, Vishvjit Singh, Middletown, New Jersey 07748 (US)
(74) Representative: Watts, Christopher Malcolm Kelway, Dr.

(57) **Abstract**

A selected image view generator is disclosed for generating a selected portion of a larger compressed image. A selected image view from an overall image is generated with significantly reduced computation and reduced latency (for video processing). Frame insensitivity permits selected image views to be formed from static images or from a video stream. Multiple users can simultaneously control a selected view received from an image source. Remote cameras can be panned electronically, rather than physically. The overall compressed image may be encoded using a suitable intra-frame macroblock-based image encoder, provided that each macroblock is encoded independently. Each macroblock optionally contains a macroblock identifier indicating the position of the macroblock in a given image. Each transmitted overall image and selected image view optionally includes a frame header indicating the number of macroblocks in the transmitted image.

## Description

### Field of the Invention

The present invention relates to image encoding and decoding techniques, and more particularly, to a method and apparatus for generating a partial image from a larger compressed image (or a plurality of individual images).

### Background of the Invention

Due to the limited bandwidth of transmission channels, there are a limited number of bits available for encoding image information, such as image information generated by a camera for transmission to one or more remote users. Thus, there are many image encoding techniques available which encode the image information with as few bits as possible using compression techniques, while still maintaining the quality and intelligibility that are required for a given application.

Remote cameras, such as those used for security applications, traffic monitoring or daycare monitoring, are typically panned by physically moving the camera. In addition to the possibility of a mechanical failure, the utility of such remote cameras is limited in that only one user can control the camera at a time. For multi-user applications, however, such limited user control of the camera view is not practical. A number of software techniques have been developed for permitting a number of users to view selected portions of a larger image (or a composite image generated from a plurality of individual images).

Permitting multiple selected views of a larger image, however, becomes more difficult if the larger image is compressed. Specifically, since image data following image compression is of variable length, pixel boundaries are not readily detectable in a compressed image. In addition, since many encoding techniques exhibit intra-frame pixel dependencies, such as encoding the difference values for adjacent DC coefficients under the JPEG standard, the pixel values must be modified when generating a selected portion of a larger image, to reflect the reordering of the subset of pixels in the selected image view.

Typically, when generating a selected portion of a larger compressed image, the larger image must be decompressed into the pixel domain, before the pixel values are reordered and assembled to create each of the selected image views. Thereafter, each of the selected image views are compressed to form the final images transmitted to each user. The more popular image compression techniques, such as JPEG and MPEG, typically perform three steps to generate a compressed image, namely, (i) transformation, such as a discrete cosine transform (DCT), (ii) quantization; and (iii) run-length encoding (RLE). Likewise, to decompress images using these same image compression techniques, the inverse of the compression steps are performed by the receiver on the compressed image, namely, (i) run-length decode; (ii) dequantization; and (iii) inverse discreet cosine transform (IDCT).

Thus, to create N selected image views from a larger compressed image, conventional techniques require one image decompression, *N* pixel reorderings, and N compressions.

### Summary of the Invention

Generally, a selected image view generator for generating a selected portion of a larger compressed image is disclosed. The larger compressed image includes a plurality of macroblocks of image data, encoded using an intraframe encoding technique that encodes the macroblocks independently, thereby allowing macroblocks within the selected image view to be selectively assembled to create the selected image view. The selected image view generator stores the larger compressed image, receives an indication of the selected image view from a user, identifies the macroblocks from the larger image included in the selected image view and assembles the identified macroblocks to form the selected image view.

According to another aspect of the invention, multiple users can simultaneously control a selected view received from an image source. The overall image may include one or more static or real-time images. The selected image from a larger overall image may be used, for example, with a 360° panning camera, to permit each user to select a desired real-time or static view. For example, for a tennis match, different users can watch different players from the same video feed.

The larger compressed image may be encoded using a suitable intra-frame macroblock-based image encoder, provided that each macroblock is encoded independently to ensure that the correlation between DC coefficients is restricted to within a given macroblock. Independent macroblocks may be achieved within the JPEG standard, for example, by initiating the Restart interval for each macroblock. Each macroblock optionally contains a macroblock identifier. Each macroblock identifier initially indicates the position of the macroblock in a given image. The macroblock identifiers are optionally renumbered for each selected image view to indicate the position of the macroblock in the selected image view. In addition, each transmitted overall image and selected image view optionally includes a frame header indicating the number of macroblocks in the transmitted image.

### Brief Description of the Drawings

FIG. 1A illustrates a block diagram of a network suitable for transferring information from an image source device to one or more destination devices;
FIG. 1B illustrates a selected image view from an overall larger image;
FIG. 2 illustrates one embodiment of the selected image view generator of FIG. 1; and
FIG. 3 is a flow chart describing the selected image view generation process of FIG. 2.

### Detailed Description

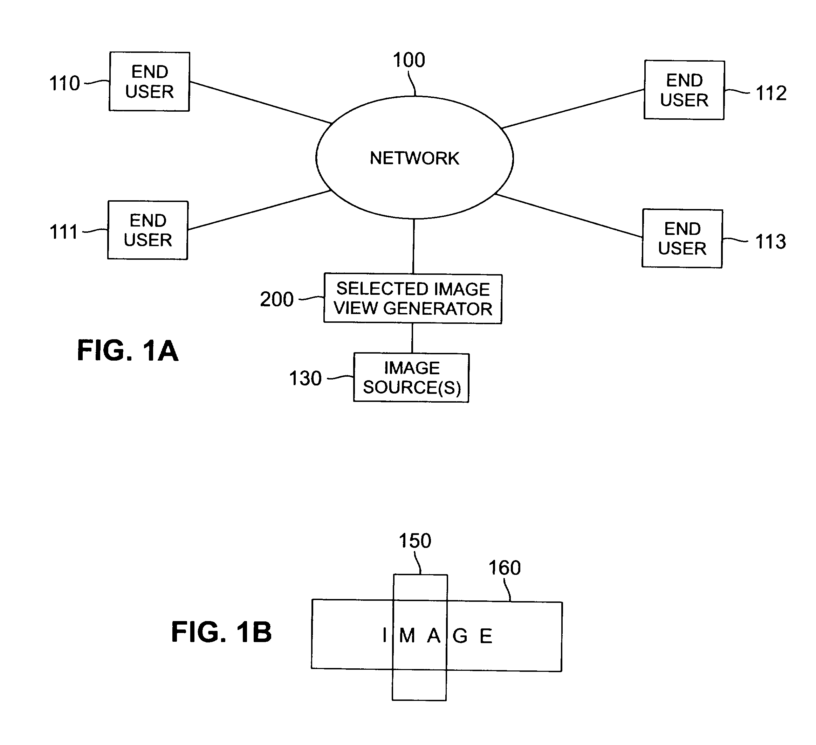

FIG. 1A shows an illustrative network environment 100 for transferring multimedia information, such as image, video, voice or data information, or a combination of the foregoing, between one or more sources and destinations, such as end users 110-113 and an image source 130. As shown in FIG. 1B, each end user 110-113, such as end user 110, desires to view a selected portion 150 of a compressed image 160. The compressed image 160 is generated by one or more image sources, such as image source 130. The image source 130 may be embodied, for example, as a 360° camera that produces panoramic images, or one or more cameras generating images that may be combined into a composite image. For a detailed discussion of a suitable 360° camera, see United States Patent Application Serial Number 08/433,356, entitled "Panoramic Viewing Apparatus," assigned to the assignee of the present invention and incorporated by reference herein.

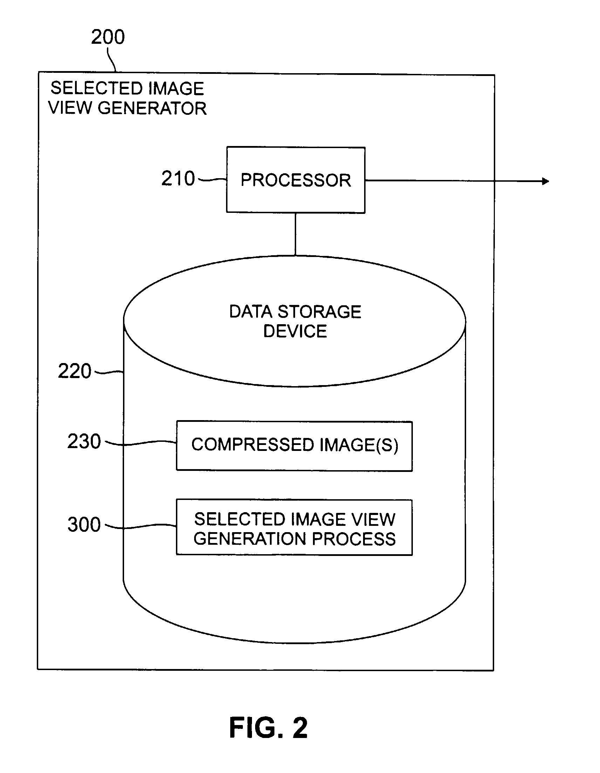

A selected image view generator 200, discussed further below in conjunction with FIG. 2, generates the selected portion(s) 150 of the image 160, shown in FIG. 1B. As used herein, the image 160 includes a composite image generated from one or more individual images. In one embodiment, each user receives the overall image 160, as well as the currently selected image view 150 The transmitted overall image 160 provides the user 110 with an orientation and permits the user 110 to select the desired view 150. For one set of video applications, the overall image 160 can be transmitted at a rate below the standard frame rate, and the smaller selected image view 150 can be transmitted at the highest rate permitted by the available bandwidth. In one video implementation, the user selects a view point, and whatever passes in the selected viewpoint over time is presented to the user In a still image implementation, the smaller selected image view 150 can be presented with a higher resolution than the overall image 160 and/or mapped to a larger portion of the display screen.

The selected image view generator 200 may utilize a variety of image inputs encoded with independent macroblocks, for example, received from a file server, a video-on-demand system or a real-time camera. The network environment 100 may be embodied, for example, as the Public Switched Telephone Network ("PSTN"), the Internet, or other broadband networks, as would be apparent to a person of ordinary skill. In the illustrative embodiment, the end users 110-113 can utilize work stations (not shown), or other general-purpose computing devices.

According to a feature of the present invention, a selected image view 150 from an overall image 160 is generated with significantly reduced computation and reduced latency (for video processing), permitting viewing of live events without noticeable delay. In addition, the present invention permits selected image views 150 to be formed from static images or from a video stream or both. According to a further feature of the present invention, multiple users can simultaneously control a selected view received from the image source 130. In this manner, a user 110 obtains personalized access to the image source 130.

The image 160 may be encoded using a suitable intra-frame macroblock-based image encoder, such as a JPEG image encoder or an MPEG intra-frame image encoder, as modified herein to incorporate the features and functions of the present invention. In the illustrative JPEG embodiment, each image 160 consists of macroblocks of pixels. Macroblocks are typically a 16 x 8 or a 16 x 16 pixel array. Typically, macroblocks are transmitted sequentially from left to right, top to bottom. Thus, for example, 2400 16 x 8 macroblocks would constitute an entire 640 x 480 pixel frame. The macroblocks constitute one or more independent color components, which may be at different resolution levels. In the illustrative JPEG embodiment, each illustrative 16 x 8 macroblock is represented by 2 luminance (Y) blocks and 2 chrominance (C_{b},Cᵣ) blocks, with each block containing I DC coefficient value, and 63 AC coefficient values.

Under the JPEG standard, the AC and DC coefficients are coded in a different manner. For a detailed discussion of JPEG encoding, see William B Pennebaker and Joan L. Mitchell, JPEG Still Image Data Compression Standard (Ban Nostrand Reinhold, 1993), incorporated by reference herein. Generally, the DC coefficient is a multiple of the average value in the 8 x 8 block. Since the average pixel value in any 8 x 8 block will not differ substantially from the average value in a neighboring block, the DC coefficient values will typically not vary significantly. Thus, in order to achieve further bit rate reductions in the JPEG standard, the differences between adjoining coefficients are typically encoded rather than the coefficients themselves.

In accordance with the present invention, however, each macroblock is encoded independently. Thus, the correlation between DC coefficients is restricted to within a given macroblock. Independent macroblocks may be achieved within the JPEG standard, for example, by initiating the Restart interval for each macroblock. One suitable system for encoding the macroblocks independently is the Montage™ video coding system, being developed by Lucent Technologies Inc, Holmdel, NJ. For a detailed discussion of the Montage™ video coding system, see R. Gaglianello and G.L. Cash, "Montage: Continuous Presence Teleconference Utilizing Compressed Domain Video Bridgin," I.E.E.E. I.C.C. (June, 1995).

Each macroblock optionally contains a macroblock identifier. Each macroblock identifier includes data representative of the position of the macroblock in the image 160. Macroblock identifiers are typically assigned sequentially left to right, top to bottom in each image. The macroblock identifiers are generally specific to each image 160. In some compression standards, such as JPEG, macroblock identifiers are generally not utilized. In accordance with the present invention, the macroblock identifiers associated with macroblocks in a selected image view 150, if present, are optionally renumbered to indicate the position of the macroblock in the selected image view 150. In addition, each image frame optionally includes a frame header indicating the number of macroblocks in the transmitted image.

FIG. 2 is a block diagram showing the architecture of an illustrative selected image view generator 200. The selected image view generator 200 preferably includes a processor 210 and related memory, such as a data storage device 220. The processor 210 may be embodied as a single processor, or a number of processors operating in parallel. The data storage device 220 or other memory are operable to store one or more instructions, which the processor 210 is operable to retrieve, interpret and execute.

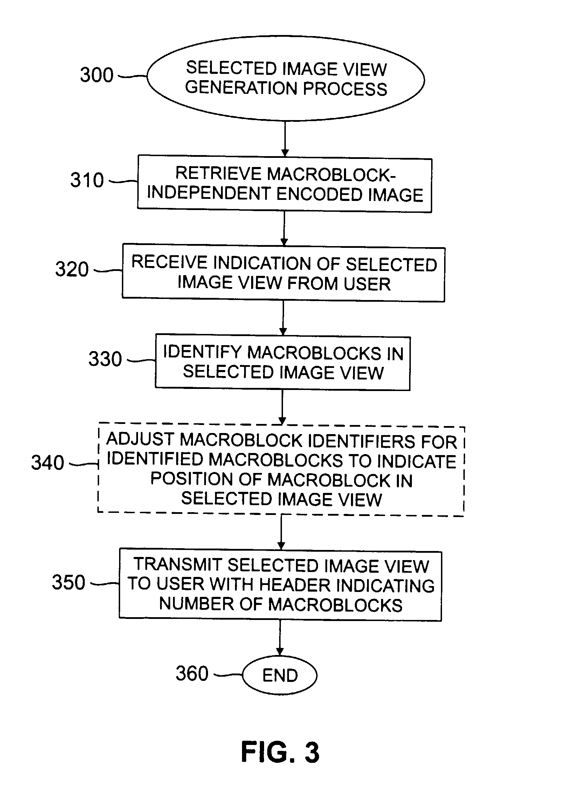

The data storage device 220 preferably includes an area of memory 230 for storing the compressed image(s) 160. The selected image view generator 200 may receive the compressed image(s) 160 from the image source 130 for processing in real-time or static compressed images may be retrieved from a database of images, such as a video server, as would be apparent to a person of ordinary skill. In addition, as discussed in conjunction with FIG. 3, the data storage device 220 preferably includes a selected image view generation process 300. Generally, the selected image view generation process 300 (i) retrieves the encoded input image data; (ii) retrieves an indication of the image view selected by the user; and (iii) generates and transmits the selected image view 150 to the user.

As shown in FIG. 3, the selected image view generation process 300 initially retrieves the image 160 that has been compressed using a macroblock-independent image encoder (not shown) during step 310. The selected image view generation process 300 then receives an indication of the selected image view from the user, such as user 110, during step 320. The user may indicate the selected image view, for example, using a graphical user interface (GUI) to outline the desired region of a larger image displayed on a computer screen. The outline box created by the user using the GUI can optionally snap to the dimensions of the macroblocks, in a known manner.

Thereafter, the selected image view generation process 300 identifies the macroblocks from the overall image 160 during step 330 that are included in the selected image view 150. In an embodiment where each macroblock contains a macroblock identifier (for example, when the images are encoded by an MPEG encoder), the macroblock identifiers associated with the macroblocks identified during step 330 are adjusted during step 340 to indicate the position of each macroblock in the selected image view 150. Finally, the selected image view 150 is transmitted to the user, such as user 110, during step 350, before program control terminates during step 360. The transmitted image preferably includes a header indicating the number of macroblocks in the selected image view 150.

It is to be understood that the embodiments and variations shown and described herein are merely illustrative of the principles of this invention and that various modifications may be implemented by those skilled in the art without departing from the scope of the invention.

## Claims

1. A method of generating a selected image view from a larger compressed image, said larger compressed image being made up of at least a pluality of macroblocks of image data, said method comprising the steps of:
identifying the macroblocks from the larger compressed image included in the selected image view, said larger compressed image encoded using an intraframe encoding technique that encodes said macroblocks independently; and
assembling said identified macroblocks to form said selected image view.

2. The method according to claim 1, further comprising the step of including a header with said selected image view indicating the number of said macroblocks in said selected image view.

3. The method according to claim 1 or claim 2, wherein each of said macroblocks has an associated macroblock identifier indicating the position of said macroblock in an image.

4. The method according to claim 3, further comprising the step of adjusting said macroblock identifier to indicate the position of each macroblock in the selected image view.

5. The method according to any of the preceding claims wherein said intraframe encoding technique is JPEG.

6. The method according to any of claims 1 to 4, wherein said intraframe encoding technique is MPEG.

7. The method according to any of the preceding claims. wherein said larger compressed image is a panoramic view.

8. The method according to any of the preceding claims, wherein said larger compressed image is one image frame in a video stream.

9. The method according to claim 8, wherein the content in said selected image view can change with each frame of said video stream.

10. The method according to any of the preceding claims, wherein said identifying step comprises the step of identifying the macroblocks from the larger compressed image included in the image view selected by a user using a graphical user interface to outline the desired region of the larger compressed image.

11. The method according to any of the preceding claims, further comprising the step of decoding said larger compressed image only enough to detect said macroblocks.

12. The method according to any of the preceding claims, wherein said independent macroblocks are obtained by restarting the encoding of said larger compressed image between each of said macroblocks.

13. A method as claimed in any of the preceding claims including an initial step of encoding said macroblocks independently using said intraframe encoding technique.

14. The method according to any of the preceding claims, further comprising the step of transmitting said selected image view to a user.

15. A selected image view generator for generating a selected image view from a larger compressed image, said larger compressed image being made up of at least a plurality of macroblocks of image data, comprising:
a data storage device for storing said larger compressed image, said larger compressed image being encoded using an intraframe encoding technique that encodes said macroblocks independently:
an input for receiving an indication of said selected image view from a user; and
means arranged to carry out a method as claimed in any of claims 1 to 12.

16. The selected image view generator according to claim 16, further comprising a communications port for transmitting said selected image view to a user.

17. An image receiver, comprising:
a transmitter for transmitting a request for a selected image view of a larger compressed image;
a receiver for receiving said selected image view, said selected image view comprised of a plurality of independent macroblocks encoded using an intraframe encoding technique; and
decompression means for decompressing said macroblocks and presenting said selected image view to a user.

18. A method ot transmitting a selected image view from a larger compressed image to a user. said larger compressed image being made up of at least a plurality of macroblocks of image data, said method comprising the steps of:
transmitting said larger compressed image to a user at a first rate;
receiving a selection of a selected image view within said larger compressed image from a user;
identifying the macroblocks from the larger compressed image included in the selected image view, said macroblocks being independently encoded using an intraframe encoding technique; and
transmitting said identified macroblocks to said user at a second rate to form said selected image view, said second rate being faster than said first rate.
